# EUROPÄISCHE PATENTSCHRIFT

(11) **EP 0 459 197 B1**
(45) Veröffentlichungstag und Bekanntmachung des Hinweises auf die Patenterteilung: **09.11.1994**
(21) Anmeldenummer: 91107664.4
(22) Anmeldetag: 11.05.1991
(51) Int. Cl.: C01C 1/24

(54) **Verfahren zur Reinigung von Ammoniumsulfat-Lösungen**
Process for the purification of ammonium sulphate solutions
Procédé de purification des solutions de sulfate d'ammonium

(30) Priorität: 24.05.1990 DE 4016715
(43) Veröffentlichungstag der Anmeldung: 04.12.1991
(73) Patentinhaber: BAYER AG, 51368 Leverkusen (DE)
(72) Erfinder: Schwarz, Hans-Helmut, Dr., W-4150 Krefeld (DE); Immel, Otto, Dr., W-4150 Krefeld (DE); Burkhardt, Klaus, Dr., B-2130 Brasschaat, Antwerpen (BE); Putseys, Roland, Dr., B-2180 Kalmthout, Antwerpen (BE)

(56) Entgegenhaltungen:
- EP-A- 0 126 058
- DE-B- 1 284 954
- FR-A- 2 078 949
- GB-A- 1 160 580
- US-A- 3 408 157
- CHEMICAL ABSTRACTS, vol. 85, no. 2, 12. Juli 1976, Columbus, Ohio, US; abstractno. 10076 Y, K. HARA ET AL. 'Treating waste solutions containing organicmatters and ammonium sulfate. ' Seite 302 ;
- CHEMICAL ABSTRACTS, vol. 83, no. 14, 4. Oktober 1976, Columbus, Ohio, US;abstract no. 96560 M, H. SATO ET AL. 'Prevention of coloring of by-productammonium sulfate from caprolactam. ' Seite 136 ;

## Beschreibung

In industriellen Prozessen fallen verschiedentlich Ammoniumsulfatlösungen an, die als Verunreinigung Ammoniumnitrat und mehrere organische Bestandteile enthalten. Aus diesen Lösungen wird durch Verdampfungskristallisation festes Ammoniumsulfat erzeugt. In der dabei entstehenden Mutterlauge reichern sich die organischen Verunreinigungen sowie das Ammoniumnitrat an. Wegen dieser Beimengungen ist eine weitere Verwendung dieser Ammoniumsulfat enthaltenden Restlösung nicht möglich.

Es besteht daher die Aufgabe, diese verunreinigte Ammoniumsulfatlösung von den Nebenbestandteilen so weit zu befreien, daß die gereinigte Lösung wieder in den Kristallisationsprozeß zurückgeführt werden kann.

DE-B-1284954 offenbart ein Verfahren zur gewinnung von gereinigtem Kristallinem Ammonsulfat aus der im wesentlichen Hydroxylaminsulfat als Verunreinigung enthaltenden Ablange der Caprolactam-Herstellung. Bei diesem bekannten Verfahren wird die ammonnitrathaltige Ablange bei einer Temperatur von 130 bis 160°C unter Durch erhotzt.

Es wurde nun gefunden, daß man Ammoniumsulfatlösungen, die Ammoniumnitrat und organische Produkte als Nebenbestandteile enthalten, reinigen und in den Ammoniumsulfat-Kristallisationsprozeß zurückführen kann, wenn man diese Lösungen mit Reduktionsmitteln bei Temperaturen zwischen 150 und 320°C behandelt und gegebenenfalls anschließend eine Behandlung mit Oxidationsmitteln durchführt.

Ammoniumsulfatlösungen, die als Mutterlauge bei der (NH₄)₂SO₄-Kristallisation entstehen, enthalten 20 - 35 % Ammoniumsulfat, 5 - 15 % Ammoniumnitrat und 1 bis 8 % organische Verunreinigungen. Erhitzt man diese Lösungen mit Reduktionsmitteln unter Druck auf Temperaturen um 200-350°C, so zerfällt das Ammoniumnitrat und gleichzeitig flockt ein Teil der organischen Nebenprodukte als feste Substanz aus und kann z.B. durch Filtration entfernt werden.

Zur Reduktion für die Spaltung des NH₄NO₃ können die bekannten Reduktionsmittel eingesetzt werden. Beispiele sind Methanol, Ethanol, Isopropanol, Formaldehyd, Aceton, SO₂, H₂S, S, (NH₄)₂S und Wasserstoff.

Bei der Verwendung von Wasserstoff werden zweckmäßig lösliche Metallsalze, vzw. Sulfate von Eisen, Mangan, Chrom, Kobalt und Nickel, als Katalysatoren eingesetzt. Auch feste, in Wasser nicht lösliche Katalysatoren wie z.B. Eisenoxide und Trägerkatalysatoren auf der Basis von SiO₂, Al₂O₃, Al-Silikaten, die mit Eisen-, Chrom-, Nickel-, Kobalt- sowie Edelmetallsalzen dotiert sind, können Verwendung finden.

Die Mengen an Reduktionsmitteln, die bezogen auf Ammoniumnitrat eingesetzt werden können, variieren zwischen 0.1 - 7 Molen pro Mol NH₄NO₃. Bei organischen Verbindungen werden vorzugsweise Molverhältnisse zwischen 0.4 und 1.2 eingestellt. Bei anorganischen Reduktionsmitteln beträgt das Molverhältnis Reduktionsmittel/NH₄NO₃ vorzugsweise 0.5 - 2.

Bei der Verwendung von Wasserstoff als Reduktionsmittel beträgt die Konzentration der als Katalysator verwendeten Metallsalze 0.0001 - 1 Mol/l, vzw. 0.001 -0.01 Mol/l.

Die Drucke, bei denen die Reaktion durchgeführt wird, sollen höher sein als der Partialdruck des Wassers bei Reaktionstemperatur.

Nach der Behandlung mit Reduktionsmitteln ist der Gehalt an Nitrat-Ionen in der Lösung weitgehend vermindert worden. Der Gehalt an löslichen organischen Verunreinigungen dagegen reduziert sich auf etwa 20 -30 % des ursprünglichen Wertes. Eine fast vollständige Entfernung von organischen Verunreinigungen kann gegebenenfalls durch eine an sich bekannte Oxidation mit Luft, Sauerstoff oder Salpetersäure vorgenommen worden. Diese Oxidationen werden bekanntlich im Temperaturbereich von 200 bis 350°C unter Druck durchgeführt.

Für die Reinigung der Ammoniumsulfatlösung kann die Reihenfolge der Reinigungsschritte verändert werden. So ist ohne weiteres eine (Luft)oxidation als erster Schritt mit nachfolgender Reduktionsbehandlung im Hinblick auf die Reinigung durchführbar. Eine oxidative Behandlung zusätzlich zur reduktiven Behandlung ist bevorzugt. Die bei diesen Prozessen ausfallenden Feststoffe können zwischen den Reaktionsstufen oder am Ende des Verfahrens von der gereinigten Lösung abgetrennt werden.

Das Verfahren kann absatzweise und kontinuierlich durchgeführt werden.

### Beispiele

### Beispiel 1

1335 g Ammoniumsulfatlösung, die 330 g/l Ammoniumsulfat, 97,8 g/l Ammoniumnitrat und organische Verunreinigungen enthält, deren CSB-Wert (chemische Sauerstoffedarf) 80 g/l beträgt, wird mit 117 g SO₂ gesättigt. Diese Lösung wird in N₂-Atmosphäre im Autoklaven 2 h auf 280°C erhitzt. Nach einer Filtration in der Kälte zur Entfernung ausgefallener Produkte wird die Lösung 2 h bei 280°C und 85 bar mit 200 Nl/h Luft begast. Die so gereinigte, fast farblose Ammoniumsulfatlösung enthält nur noch 0,9 g/l NH₄NO₃. Der CSB-Wert beträgt 1,8 g/l. Sie kann in die Ammoniumsulfat-Kristallisation zurückgeführt werden.

### Beispiel 2

617 g Ammoniumsulfatlösung, die 97,8 g/l Ammoniumnitrat, 330 g/l Ammoniumsulfat und organische Verunreinigungen enthält, deren CSB (chem. Sauerstoffbedarf) 80 g/l beträgt, wird mit 20 g Methanol und 617 g Wasser unter N₂-Atmosphäre 3 h auf 280°C im Autoklaven erhitzt. Es stellt sich ein Druck von 85 bar ein.

Nach dem Abkühlen wird die Lösung filtriert. Sie enthält noch 15,5 g/l Ammoniumnitrat und einen CSB-Wert von 15 g/l.

### Beispiel 3

Eine Wiederholung des Beispiels 2 mit 71 g 30 %iger Formalinlösung statt Methanol senkte den NH₄NO₃-Wert auf 9 g/l und den CSB-Wert auf 19,8 g/l.

### Beispiel 4

800 g Ammoniumsulfatlösung mit der in Beispiel 1 abgegebenen Zusammensetzung wurde mit 48,6 g Isopropanol in Stickstoff-Atmosphäre 3 h auf 250°C erhitzt. Der Ammoniumnitratwert wurde auf 7 g/l und der CSB-Wert auf 23,8 g/l gesenkt.

### Beispiel 5

1235 g Ammoniumsulfat-Lösung (nach Beispiel 1) wird mit 53 g 40 % (NH₄)₂S-Lösung 3 h auf 250°C erhitzt. Durch diese Maßnahme wird der NH₄NO₃-Gehalt auf 36,1 g/l vermindert.

### Beispiel 6

IN 1235 g Ammoniumsulfatlösung werden 18,3 g FeSO₄·7 H₂O gelöst. Unter Wasserstoffdruck von 100 bar wird diese Lösung auf 280°C im Autoklaven erwärmt. Drucksteigerungen bis auf 200 bar werden durch Entspannung abgebaut. Wasserstoff wird durch dreimaliges Nachpressen von 40 bar H₂ zu der Lösung hinzugegeben. Nach 1 h Reaktionszeit wurden keine Druckänderungen im Autoklaven mehr beobachtet.

Der Ammoniumnitratgehalt war auf 6 mg/l abgebaut worden. Der CSB-Wert betrug 19,4 g/l.

### Beispiel 7, 8 und 9

Je 1235 g Ammoniumsulfatlösung der gleichen Zusammensetzung wie in Beispiel 1 wurde in einen 2 1-Autoklaven gegeben und mit FeSO₄ oder MnSO₄ versetzt. Ein weiterer Versuch erfolgte ohne einen Zusatz. Es wurde jeweils ein Wasserstoffdruck von 100 bar aufgedrückt und die Lösungen auf 250°C erwärmt, wobei der Druck im Autoklaven auf 185 - 190 bar ansteigt. Dreimal wurde im Abstand von einer Stunde der Druck um 40 bar entspannt und anschließend wieder 40 bar Wasserstoff aufgepreßt. Die Versuche wurden jeweils nach 4 Stunden abgebrochen, der Autoklaveninhalt abgekühlt und analysiert.

| Beispiel | Zusatz | CSB (g/l) | NH₄NO₃ (g/l) |
|---|---|---|---|
| 7 | 11,1 g MnSO₄· H₂O | 36,2 | 0,23 |
| 8 | 18,3 g FeSO₄· 7 H₂O | 36,5 | 0,26 |
| 9 | - | 36,5 | 4,5 |

## Patentansprüche

1. Verfahren zur Reinigung von Ammoniumsulfatlösungen, die Ammoniumnitrat und organische Verunreinigungen enthalten, dadurch gekennzeichnet, daß man die Ammoniumsulfatlösungen mit Reduktionsmitteln und gegebenenfalls Oxidationsmitteln in beliebiger Reihenfolge, auf Temperaturen zwischen 200 und 350°C unter Druck erhitzt.

2. Verfahren nach Anspruch 1, dadurch gekennzeichnet, daß als Reduktionsmittel Alkohole, Aldehyde und Ketone verwendet werden.

3. Verfahren nach Anspruch 1, dadurch gekennzeichnet, daß als Reduktionsmittel Schwefel und Schwefelverbindungen mit einer Oxidationsstufe <4 eingesetzt werden.

4. Verfahren nach Anspruch 1, dadurch gekennzeichnet, daß Wasserstoff als Reduktionsmittel, ggf. in Gegenwart von üblichen Katalysatoren, verwendet wird.

5. Verfahren nach Anspruch 4), dadurch gekennzeichnet, daß als Katalysatoren lösliche Metallsalze oder feste Katalysatoren mitverwendet werden.

6. Verfahren nach Ansprüchen 1 bis 4, dadurch gekennzeichnet, daß 0,1 bis 5 Mole Reduktionsmittel pro Mol Ammoniumnitrat verwendet werden.

7. Verfahren nach Ansprüchen 1 und 2, dadurch gekennzeichnet, daß 0,4 bis 2 Mol organische Reduktionsmittel pro Mol Ammoniumnitrat verwendet werden.

8. Verfahren nach Ansprüchen 1, 3, 4 und 5, dadurch gekennzeichnet, daß 0,5 bis 7 Mol anorganische Reduktionsmittel pro Mol Ammoniumnitrat eingesetzt werden.

9. Verfahren nach Ansprüchen 1 bis 8, dadurch gekennzeichnet, daß nach der Reduktion eine Oxidation mit Luft, Sauerstoff oder Salpetersäure im Temperaturbereich von 200 bis 350°C unter Druck vorgenommen wird.

10. Verfahren nach Ansprüchen 1 bis 9, dadurch gekennzeichnet, daß nach der reduktiven und gegebenenfalls oxidativen Reinigung die Mischungen in den Ammoniumsulfat-Kristallisationsprozeß zurückgeführt werden.

## Claims

1. Process for the purification of ammonium sulphate solutions containing ammonium nitrate and organic impurities, characterised in that the ammonium sulphate solutions are heated to temperatures between 200 and 350°C under pressure with reducing agents and optionally oxidising agents in any sequence.

2. Process according to claim 1, characterised in that the reducing agents used are alcohols, aldehydes and ketones.

3. Process according to claim 1, characterised in that the reducing agents used are sulphur and sulphur compounds with an oxidation number of < 4.

4. Process according to claim 1, characterised in that hydrogen is used as the reducing agent, optionally in the presence of customary catalysts.

5. Process according to claim 4, characterised in that soluble metal salts or solid catalysts are added as catalysts.

6. Process according to claims 1 to 4, characterised in that 0.1 to 5 mol of reducing agents are used per mol of ammonium nitrate.

7. Process according to claims 1 and 2, characterised in that 0.4 to 2 mol of organic reducing agents are used per mol of ammonium nitrate.

8. Process according to claims 1, 3, 4 and 5, characterised in that 0.5 to 7 mol of inorganic reducing agents are used per mol of ammonium nitrate.

9. Process according to claims 1 to 8, characterised in that, after reduction, oxidation with air, oxygen or nitric acid is performed in the temperature range from 200 to 350°C under pressure.

10. Process according to claims 1 to 9, characterised in that, after the reductive and optionally oxidative purification, the mixtures are returned to the ammonium sulphate crystallisation process.

## Revendications

1. Procédé de purification de solutions de sulfate d'ammonium, qui contiennent du nitrate d'ammonium et des impuretés organiques, caractérisé en ce qu'on chauffe les solutions de sulfate d'ammonium avec des agents réducteurs et éventuellement des agents oxydants dans un ordre quelconque, à des températures comprises entre 200 et 350°C sous pression.

2. Procédé selon la revendication 1, caractérisé en ce qu'on utilise en tant qu'agent réducteur des alcools, des aldéhydes et des cétones.

3. Procédé selon la revendication 1, caractérisé en ce qu'on introduit en tant qu'agent réducteur du soufre et des composés du soufre avec un degré d'oxydation inférieur à 4.

4. Procédé selon la revendication 1, caractérisé en ce qu'on utilise de l'hydrogène en tant qu'agent réducteur, éventuellement en présence de catalyseurs classiques.

5. Procédé selon la revendication 4, caractérisé en ce qu'on utilise en tant que catalyseurs des sels métalliques solubles ou des catalyseurs solides.

6. Procédé selon les revendications 1 à 4, caractérisé en ce qu'on utilise 0,1 à 5 mol d'agent réducteur par mole de nitrate d'ammonium.

7. Procédé selon les revendications 1 et 2, caractérisé en ce qu'on utilise 0,4 à 2 mol d'agent réducteur organique par mole de nitrate d'ammonium.

8. Procédé selon les revendications 1, 3, 4 et 5, caractérisé en ce qu'on introduit 0,5 à 7 mol d'agent réducteur inorganique par mole de nitrate d'ammonium.

9. Procédé selon les revendications 1 à 8, caractérisé en ce qu'on entreprend après la réduction une oxydation avec de l'air, de l'oxygène ou de l'acide nitrique dans un domaine de températures de 200 à 350°C sous pression.

10. Procédé selon les revendications 1 à 9, caractérisé en ce qu'on recycle dans le procédé de cristallisation de sulfate d'ammonium les mélanges après la purification par réduction et éventuellement par oxydation.
